Europäisches Patentamt

European Patent Office

Office européen des brevets

(11) Veröffentlichungsnummer: **0 332 608 B1**

# EUROPÄISCHE PATENTSCHRIFT

(45) Veröffentlichungstag der Patentschrift:
27.02.91 Patentblatt 91/09

(51) Int. Cl.⁵: **F16D 35/00, B60K 17/35**

(21) Anmeldenummer: **89890063.4**

(22) Anmeldetag: **10.03.89**

(54) **Flüssigkeitsreibungskupplung und deren Anwendung.**

(30) Priorität: **11.03.88 AT 660/88**

(43) Veröffentlichungstag der Anmeldung:
**13.09.89 Patentblatt 89/37**

(45) Bekanntmachung des Hinweises auf die
Patenterteilung:
**27.02.91 Patentblatt 91/09**

(84) Benannte Vertragsstaaten:
**DE FR GB IT SE**

(56) Entgegenhaltungen:
**AT-B- 384 086
DE-A- 3 518 682
DE-A- 3 721 586
DE-C- 3 415 547**

(56) Entgegenhaltungen:
**DE-C- 3 703 353
FR-A- 2 302 457
GB-A- 414 662
GB-A- 1 475 141**

(73) Patentinhaber: **STEYR-DAIMLER-PUCH
AKTIENGESELLSCHAFT
Franz-Josefs-Kai 51
A-1010 Wien (AT)**

(72) Erfinder: **Kriebernegg, August
Grenzstrasse 20
A-8580 Köflach (AT)**
Erfinder: **Lanzer, Heribert, Dipl.-Ing.
Haupststrasse 236
A-8071 Gössendorf (AT)**
Erfinder: **Peier, Othmar, Dipl.-Ing.
Köppelreith 62
A-8225 Pöllau (AT)**

### Beschreibung

Die Erfindung bezieht sich auf eine Flüssigkeitsreibungskupplung, die aus einem mit viskoser Flüssigkeit gefüllten Gehäuse, einer in dieses einragenden Welle, wechselweise mit der Welle und dem Gehäuse drehfest verbundenen, zwischeneinander greifen-den Innen- und Außenlamellen und, zur Aufrechterhaltung eines Kleinsten Lamellenabstandes, aus zwischen den Innen- oder Außenlamellen eingesetzten ringförmigen Abstandselementen besteht, wobei der weitere Lamellenabstand mittels eines im Gehäuse abgedichtet verschiebbaren, von außen her betätigbaren Ringkolbens veränderbar ist, welcher an seiner den Lamellen zugekehrten Seite eine sich etwa über den ganzen freien Gehäusequerschnitt erstrekkende, nahe an die Lamellen heranreichende, achsennormale Planfläche aufweist. Eine derartige Kupplung ist nach der DE-A-3 518 682 bekannt.

Bei dieser bekannten Konstruktion soll eine Veränderung der Übertragungsleistung durch entsprechende Maßnahmen ermöglicht werden, wobei hier eine Scherreibungskupplung eingesetzt wird, welche vollständig befüllt ist. Es finden Abstandsringe zwischen den Kupplungslamellen Anwendung, wobei außerdem der Ringkolben nur indirekt über Scherreibungswirkung verschiebbar ist.

Eine andere Flüssigkeitsreibungskupplung ist bekannt nach der AT-PS 384 086. Dabei ist der mechanisch oder hydraulisch von außen her nur gegen die Kraft von Spreizfedern einwärts drückbare Ringkolben an der den Lamellen zugekehrten Seite mit einer Aussparung versehen, so daß zwischen der ersten dem Kolben benachbarten Lamelle und der wirksamen Kolbenfläche ein verhältnismäßig großer Freiraum verbleibt. Durch diesen Freiraum innerhalb des Kupplungsgehäuses kann es zu einer Trennung von Flüssigkeit und Luft kommen, was die Regelbarkeit der Kupplung mit Hilfe des Ringkolbens ungünstig beeinflußt. Die Luft sammelt sich nämlich vorzugsweise in diesem Freiraum an, so daß zwischen den Lamellen kaum mehr Luft vorhanden ist, wodurch bei einem Einwärtsschieben des Ringkolbens nur mehr eine Regelung der Kupplung zufolge der Änderung der Spaltweite, nicht aber durch Druckänderung des Luft-Flüssigkeitsgemisches in den Spalten zwischen den Lamellen möglich ist. Die bloße Spaltweitenänderung reicht aber nicht aus, so daß sich die Regelbarkeit der bekannten Flüssigkeitsreibungskupplung in verhältnismäßig engen Grenzen hält.

Der Erfindung liegt demgegenüber die Aufgabe zugrunde, die eingangs geschilderte Flüssigkeitsreibungskupplung mit einfachen technischen Mitteln so zu verbessern, daß eine Regelung des Verlaufs des übertragbaren Drehmoments in Abhängigkeit von der Differenzdrehzahl über einen weiten Bereich gewährleistet ist.

Die Erfindung löst die gestellte Aufgabe dadurch, daß der Füllungsgrad des Gehäuses in der äußersten Kolbenstellung des Ringkolbens höchstens 60% beträgt, daß eine Flüssigkeit von mindestens 30 000 cSt Kinematischer Viskosität gewählt ist und daß die ringförmigen Abstandselemente Spreizfedern sind.

Da also der Ringkolben an seiner den Lamellen zugekehrten Seite plan verläuft und von vornherein nahe an die Lamellen heranreicht, ist ein größerer Freiraum, in dem sich Luft konzentrieren könnte, vermieden. Es wird bei Kolbenverschiebung daher nicht nur der Lamellenabstand, sondern gleichzeitig auch das Luftvolumen zwischen den Lamellen verändert. Die in den Spalten zwischen den Lamellen vorhandene Luft überträgt kein Drehmoment, die Verkleinerung dieses Luftvolumens bei Drucksteigerung durch Einwärtsschieben des Ringkolbens bringt demnach eine entsprechende Erhöhung des übertragbaren Drehmoments mit sich und es ergibt sich insgesamt eine wirksame Regelung. Durch den verhältnismäßig geringen Füllungsgrad des Gehäuses, der bei 20°C und normalem Druck zu bestimmen ist, wobei sich der Ringkolben in der äußersten Stellung, also mit weitest möglichem Abstand von den benachbarten Lamellen befindet, wird das bei auftretender Drehzahldifferenz übertragbare Drehmoment herabgesetzt und damit der Regelungsbereich nach unten verschoben bzw. erweitert. Dieser Effekt tritt besonders bei Flüssigkeiten mit höherer Viskosität auf, wobei für eine Flüssigkeitsreibungskupplung, die für den Antrieb eines Kraftfahrzeuges bestimmt ist, eine Kinematische Viskosität von 60 000 cSt zu bevorzugen ist.

Es hat sich gezeigt, daß bei der bekannten Flüssigkeitsreibungskupplung, bei der der Ringkolben durch äußere Kräfte nur einwärts gedrückt werden kann, die Kolbenrückstellung allein durch die Wirkung der Spreizfedern bzw. durch den Innendruck verhältnismäßig langsam verläuft, was insbesondere bei Kupplungen im Kraftfahrwesen unerwünscht ist. Um hier eine Verbesserung zu erzielen, ist erfindungsgemäß der Kolben von außen her in beiden Richtungen verschiebbar.

Aus dem gleichen Grund sind zwischen den Innenrändern der Außenlamellen und den Außenrändern der Spreizfedern bzw. (wenn die Spreizfedern zwischen den Außenlamellen angeordnet sind) zwischen den Außenrändern der Innenlamellen und den Innenrändern der Spreizfedern Drosselstellen gebildet. Wird nämlich der Ringkolben rasch in seine äußerste Stellung bewegt, so entsteht zwischen seiner Planfläche und der benachbarten Lamelle ein Unterdruck und es ergibt sich gegenüber dem Gehäuseraum im Bereich der entfernteren Lamellen ein Druckunterschied, der wesentlich dazu beiträgt, die Lamellen in ihre ursprüngliche Stellung zurückzuschieben.

Handelt es sich um eine für den Kraftfahrzeugbau bestimmte Flüssigkeitsreibungskupplung, für die verhältnismäßig enge Grenzen in bezug auf Größe und Gewicht gesetzt sind, ist es zweckmäßig und vorteilhaft, wenn die Spaltweite zwischen Innen- und Außenlamellen durch Kolbenverschiebung zwischen 0,1 und 0,6 mm veränderbar ist, wobei die geringste Spaltweite bzw. der geringste Lamellenabstand durch die zwischen den Lamellen eingesetzten Spreizfedern bestimmt wird.

Eine regelbare Flüssigkeitsreibungskupplung nach der Erfindung ist in der Lage, bei gleicher Differenzdrehzahl wesentlich höhere Drehmomente als eine nicht regelbare, auf ein Mittelmaß abgestimmte Kupplung zu übertragen. Gemäß dem höheren übertragbaren Drehmoment ist aber auch die entstehende Verlustleistung höher, die als Wärme hauptsächlich über die Außenlamellen an das Gehäuse abzuführen ist. Um dieser Wärmeübertragung Rechnung zu tragen, sind die Außenlamellen dicker als die Innenlamellen ausgebildet und/oder sie bestehen aus einem Werkstoff hoher Leitfähigkeit, z.B. Kupfer.

Die Erfindung liegt auch in der Anwendung der geschilderten Flüssigkeitsreibungskupplung bei einem Kraftfahrzeug mit zwei Triebachsen, dessen Antriebsstrang zu einer Triebachse über ein dreigliedriges Umlaufrädergetriebe führt, von dem ein Getriebeglied mit dem Motor in Antriebsverbindung steht und das zweite Getriebeglied dem Abtrieb zur betreffenden Triebachse bildet, wobei das dritte Getriebeglied mit der Welle der Flüssigkeitrsreibungskupplung drehfest verbunden und deren Gehäuse undrehbar gehalten ist. Die Flüssigkeitsreibungskupplung bildet hier zusammen mit dem Umlaufrädergetriebe das Ausgleichgetriebe zwischen den beiden Triebachsen. Durch die Regelbarkeit der Flüssigkeitsreibungskupplung läßt sich dann die Verteilung des Gesamtdrehmomentes auf die beiden Triebachsen je nach den Fahrverhältnissen in sehr weiten Grenzen verändern.

Würde das Gehäuse der Kupplung mitdrehen, wie dies bei einer üblichen Kupplungsanordnung der Fall ist, so würde sich unter der Einwirkung der Fliehkraft die Flüssigkeit von der Luft trennen und im Bereich des Gehäusemantels konzentrieren. Eine solche Trennung von Luft und Flüssigkeit hätte wieder eine wesentliche Verringerung der Regelbarkeit zur Folge. Da aber das Gehäuse undrehbar gehalten ist, wird bei der erfindungsgemäßen Anwendung in Folge der stets gleichmäßigen Durchmischung von Flüssigkeit und Luft die Regelbarkeit der erfindungsgemäßen Kupplung in weitem Bereich voll ausgenützt.

In der Zeichnung ist der Erfindungsgegenstand beispielsweise dargestellt, und zwar zeigen

Fig. 1 eine erfindungsgemäße Flüssigkeitsreibungskupplung in vereinfachter Darstellung im Axialschnitt,

Fig. 2 die Kupplungscharakteristik im Diagramm und

Fig. 3 das Schema einer Antriebsanordnung eines Kraftfahrzeuges unter Anwendung der Kupplung.

Die Flüssigkeitsreibungskupplung besteht aus einem mit viskoser Flüssigkeit gefüllten Gehäuse 1, aus einer in das Gehäuse einragenden bzw. in ihm gelagerten Hohlwelle 2 und wechselweise mit der Welle 2 und dem Gehäuse 1 drehfest verbundenen, zwischeneinander greifenden Innenlamellen 3 und Außenlamellen 4. Zwischen den Innenlamellen 3 sind von Tellerfedern gebildete Spreizfedern 5 eingesetzt. Das Gehäuse 1 einerseits und die Hohlwelle 2 andererseits können mit je einem An- bzw. Abtriebsglied drehfest verbunden werden, zu welchem Zweck sie jeweils mit einem Keilwellenprofil 6 ausgestattet sind.

Im Gehäuse 1 ist ein Ringkolben 7 abgedichtet verschiebbar. Er weist an seiner den Lamellen 3, 4 zugekehrten Seite eine sich etwa über den ganzen freien Gehäusequerschnitt erstrekkende und nahe an die Lamellen 3, 4 heranreichende achsnormale Planfläche 8 auf. Der Ringkolben 7 ist mit Hilfe eines Stellringes 9, an dem ein Hebel 10 od. dgl. angreift, von außen her in beiden Richtungen verschiebbar. Da zur gehäuseeinwärts gerichteten Kolbenverschiebung vergleichsweise große Kräfte erforderlich sind, ist es zweckmäßig, die Kolbenverstellung hydraulisch herbeizuführen. Zwischen den Innenrändern der Außenlamellen 4 und den Außenrändern der Spreizfedern 5 sind Drosselstellen 11 gebildet, die allerdings in der Zeichnung unverhältnismäßig weit dargestellt sind. Die Außenlamellen 4 sind wesentlich dicker als die Innenlamellen ausgebildet. Sie können auch aus einem Werkstoff hoher Leitfähigkeit bestehen.

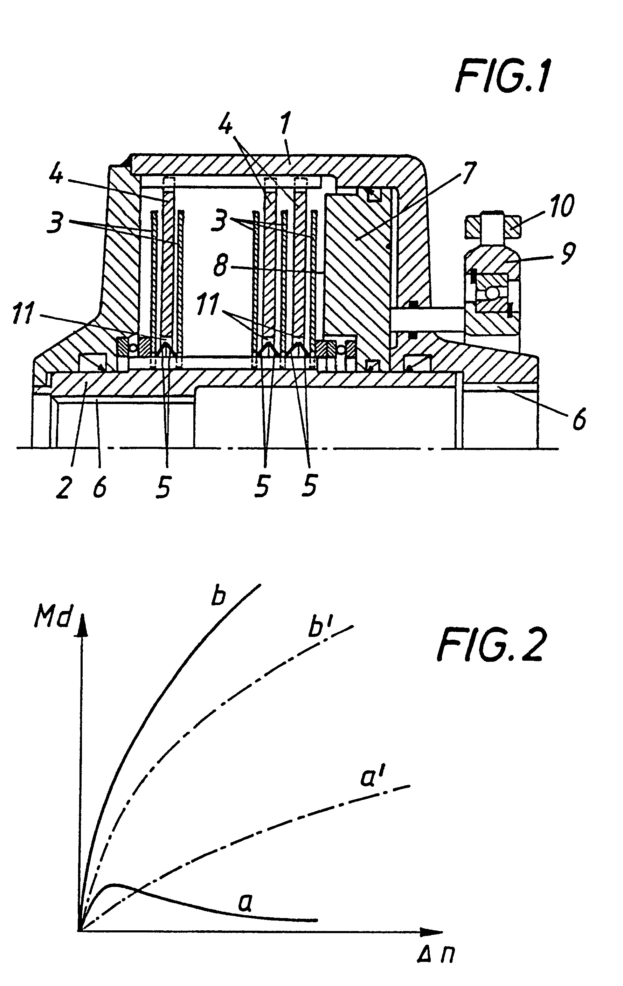

In Fig. 2 ist auf der Abszisse die Differenzdrehzahl zwischen Gehäuse 1 und Welle 2 und auf der Ordinate das jeweils übertragbare Drehmoment $M_d$ aufgetragen. Die Kurve a zeigt den Drehmomentverlauf in der in Fig. 1 dargestellten, also äußersten Stellung des Ringkolbens 7, in der im Gehäuse 1 das größte Volumen vorhanden ist. Durch Kolbenverschiebung kann dann ein Drehmomentverlauf gemäß der Kurve b erreicht werden, und es ist der weite Regelungsbereich zwischen den Kurven a und b ersichtlich, wobei die Kinematische Viskosität der im Gehäuse 1 vorhandenen Flüssigkeit mit etwa 60 000 cSt gewählt ist. Wird eine Flüssigkeit mit einer Viskosität von nur 25 000 cSt verwendet, so kommt es unter ansonsten gleichen Bedingungen zu einem Drehmomentverlauf nach den Kurven a', b', es ist dann also der Regelungsbereich beträchtlich eingeschränkt.

Der Füllungsgrad des Gehäuses 1 in der in Fig. 1 dargestellten äußersten Kolbenstellung, also das Verhältnis des Flüssigkeitsvolumens zum Innenraum des Gehäuses 1, beträgt weniger als 60% (bei 20°C und Normaldruck). Mit Hilfe des Ringkolbens 7 kann die Spaltweite zwischen den Innen- und Außenlamellen 3, 4 von 0,6 auf 0,1 mm verringert werden.

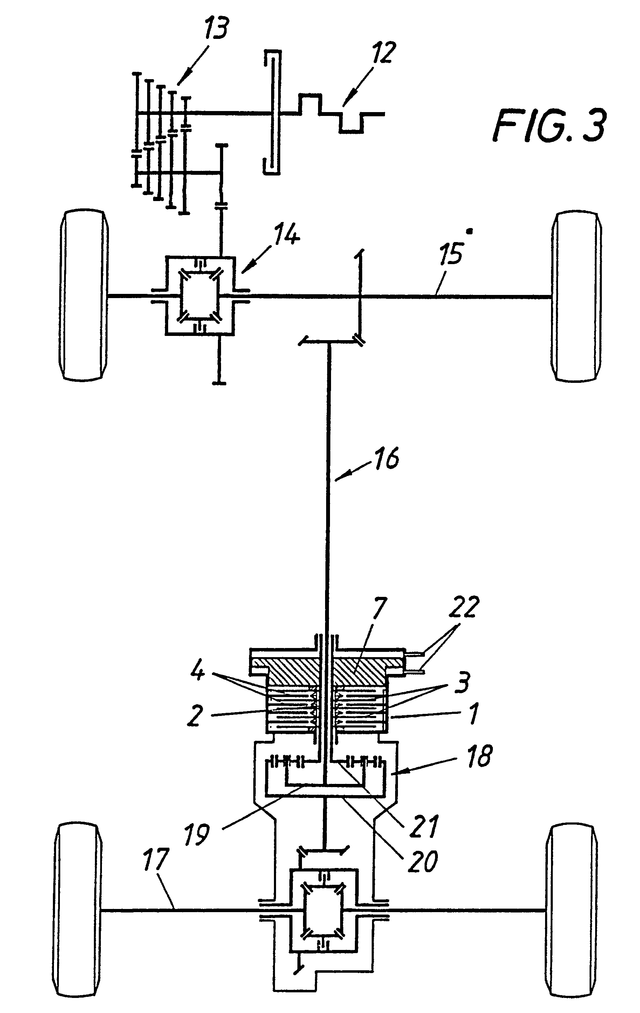

Gemäß Fig. 3 wird bei einem Personenkraftwagen vom Motor 12 über das Wechselgetriebe 13 und ein Ausgleichgetriebe 14 die Vorderachse 15 angetrieben, von der der Antriebsstrang 16 zur Hinterachse 17 führt. Im Antriebsstrang 16 ist ein Planetengetriebe 18 eingebaut, dessen Planetenradträger 19 von der Vorderachse angetrieben wird, wogegen vom Hohlrad 20 der Abtrieb zur Hinterachse 17 abgeleitet ist. Das Sonnenrad 21 ist mit der Welle 2 einer Flüssigkeitsreibungskupplung gemäß Fig. 1 drehfest verbunden, wobei aber das Gehäuse 1 undrehbar gehalten ist. Der Kolben 7 ist außerhalb des Gehäuses 1 zu einem Stufenkolben ausgebildet, der zur Kolbenverschiebung über die Leitungen 22 beaufschlagt werden kann.

## Ansprüche

1. Flüssigkeitsreibungskupplung, bestehend aus einem mit viskoser Flüssigkeit gefüllten Gehäuse (1), einer in dieses einragenden Welle (2), wechselweise mit der Welle und dem Gehäuse (1) drehfest verbundenen, zwischeneinander greifenden Innen- und Außenlamellen (3, 4) und, zur Aufrechterhaltung eines kleinsten Lamellenabstandes, aus zwischen den Innen- oder Außenlamellen (3, 4) eingesetzten ringförmigen Abstandselementen (5), wobei der weitere Lamellenabstand mittels eines im Gehäuse abgedichtet verschiebbaren, von außen her betätigbaren Ringkolbens (7) veränderbar ist, welcher an seiner den Lamellen (3, 4) zugekehrten Seite eine sich etwa über den ganzen freien Gehäusequerschnitt erstreckende, nahe an die Lamellen heranreichende, achsnormale Planfläche (8) aufweist, dadurch gekennzeichnet, daß der Füllungsgrad des Gehäuses (1) in der äußersten Kolbenstellung des Ringkolbens (7) höchstens 60% beträgt, daß eine Flüssigkeit von mindestens 30 000 cSt Kinematischer Viskosität gewählt ist und daß die ringförmigen Abstandselemente (5) Spreizfedern sind.

2. Kupplung nach Anspruch 1, dadurch gekennzeichnet, daß der Kolben (7) direkt von außen her in beiden Richtungen verschiebbar ist, und daß zwischen den Innenrändern der Außenlamellen (4) und den Außenrändern der Spreizfedern (5) bzw. zwischen den Außenrändern der Innenlamellen und den Innenrändern der Spreizfedern Drosselstellen (11) gebildet sind.

3. Kupplung nach Anspruch 1 und 2, dadurch gekennzeichnet, daß durch Kolbenverschiebung die Spaltweite zwischen Innen- und Außenlamellen (3, 4) zwischen 0,6 bis 0,1 mm veränderbar ist.

4. Kupplung nach einem der Ansprüche 1 bis 3, dadurch gekennzeichnet, daß die Außenlamellen (4) dicker als die Innenlamellen (3) ausgebildet sind und-/oder aus einem Werkstoff hoher Wärmeleitfähigkeit bestehen.

5. Anwendung der Flüssigkeitsreibungskupplung nach einem der Ansprüche 1 bis 4, dadurch gekennzeichnet, daß bei einem Kraftfahrzeug mit zwei Triebachsen (15, 17), dessen Antriebsstrang (16) zu einer Triebachse (17) über ein dreigliedriges Umlaufrädergetriebe (18) führt, von dem ein Getriebeglied (19) mit dem Motor (12) in Antriebsverbindung steht und das zweite Getriebeglied (20) den Abtrieb zur betreffenden Triebachse (17) bildet, das dritte Getriebeglied (21) mit der Welle (2) der Flüssigkeitsreibungskupplung drehfest verbunden und deren Gehäuse (1) undrehbar gehalten ist.

## Claims

1. A liquid friction coupling consisting of a housing (1) that is filled with a viscous liquid, a shaft (2), which protrudes into the housing, inter-digitating inner and outer disks (3, 4), which are non-rotatably connected to the shaft and housing (1) in alternation, and annular spacers (5), which are inserted between the inner or outer disks (3, 4) and serve to maintain a smallest disk spacing, wherein the larger disk spacing is variable by means of an annular piston (7), which is sealed and displaceable in the housing and is operable from the outside and at that end which faces the disks has a planar surface (8), which extends close to the disks approximately throughout the free cross-section of the housing, characterized in that the degree of filling of the housing (1) when the annular piston (7) is in its outermost position is not in excess of 60%, a liquid is selected which has a kinematic viscosity of at least 30,000 cSt, and the annular spacers (5) consist of expanding springs.

2. A coupling according to claim 1, characterized in that the piston (7) is displaceable in both directions directly from the outside and constrictions (11) are provided between the inner edges of the outer disks (4) and the outer edges of the expanding springs (5) or between the outer edges of the inner disks and the inner edges of the expanding springs (11).

3. A coupling according to claims 1 and 2, characterized in that the width of the gaps between the inner and outer disks (3, 4) can be changed between 0.6 mm and 0.1 mm by a displacement of the piston.

4. A coupling according to any of claims 1 to 3, characterized in that the outer disks (4) are thicker than the inner disks (3) and/or consist of a material having a high thermal conductivity.

5. A use of the liquid friction coupling according to any of claims 1 to 4, characterized in that a motor vehicle which has two driven axles (15, 17) and in which a drive train (16) connected to one driven axle (17) comprises an epicyclic gear train (18) having three torque-transmitting elements, one (19) of which is operatively connected to the motor (12), the second torque-transmitting element (20) is an output element for driving the associated driven axle (17), the third torque-transmitting element (21) is non-rotatably connected to the shaft (2) of the liquid friction coupling, the housing (1) of which is held against rotation.

## Revendications

1. Visco-coupleur se composant d'un carter (1) rempli d'un fluide visqueux, d'un arbre (2) pénétrant dans ce carter (1), de disques intérieurs et extérieurs (3, 4) calés en rotation en alternance avec l'arbre et le carter (1) et s'engageant mutuellement les uns entre les autres, ainsi que d'éléments-entretoises annulaires (5) placés entre les disques intérieurs ou les disques intérieurs (3, 4) pour conserver un écartement minimal entre les disques, l'écartement le plus grand entre les disques étant modifiable au moyen d'un piston annulaire (7) qui peut coulisser de manière étanche dans le carter et qui peut être actionné de l'extérieur, ce piston présentant sur son côté tourné vers les disques (3, 4), une surface plane (8) perpendiculaire à l'axe, s'étendant sensiblement sur la totalité de la section droite libre du carter et atteignant la proximité immédiate des disques, caractérisé en ce que le degré de remplissage du carter (1) atteint au plus 60% à la position la plus extérieure du piston annulaire, en ce qu'est choisi un liquide d'une viscosité cinématique d'au moins 30 000 cSt, et en ce que les éléments-entretoises annulaires (5) sont des ressorts d'écartement.

2. Accouplement selon la revendication 1, caractérisé en ce que le piston (7) est déplaçable de l'extérieur par coulissement dans les deux directions, et des zones d'étranglement (11) sont prévues entre les bords intérieurs des disques extérieurs (4) et les bords extérieurs des ressorts d'écartement (5) ou bien entre les bords extérieurs des disques intérieurs et les bords intérieurs des ressorts d'écartement.

3. Accouplement selon les revendications 1 et 2, caractérisé en ce que la largeur de l'intervalle entre les disques intérieurs et extérieurs (3, 4) est modifiable entre 0,6 et 0,1 mm, par le coulissement du piston.

4. Accouplement selon l'une des revendications 1 à 3, caractérisé en ce que les disques extérieurs (4) sont d'une épaisseur supérieure à celle des disques intérieurs (3) et/ou sont réalisés en une matière à conductibilité thermique plus élevée.

5. Utilisation du visco-coupleur selon l'une des revendications 1 à 4, caractérisé en ce que, sur un véhicule automobile à deux essieux moteurs (15, 17), dont l'arbre de transmission (16) destiné à l'un des essieux moteurs (17) passe par un train épicycloïdal (18) à trois éléments dont l'un des éléments de transmission (19) est accouplé au moteur (12) et dont le deuxième élément (20) constitue la sortie menée pour l'entraînement de l'essieu moteur considéré (17), le troisième élément de transmission (21) est calé en rotation avec l'arbre (2) du visco-coupleur dont le carter (1) est immobilisé contre la rotation.

FIG.1

FIG.2

FIG. 3